# EUROPÄISCHE PATENTANMELDUNG

(11) **EP 1 349 105 A2**
(43) Veröffentlichungstag der Anmeldung: **01.10.2003**
(21) Anmeldenummer: 03100553.1
(22) Anmeldetag: 06.03.2003
(51) Int. Cl.: G06K 9/00, G06K 9/52

(54) **Archivierung digitaler Bilder durch Merkmalsextraktion im Fourierraum**

(30) Priorität: 26.03.2002 DE 10213578
(71) Anmelder: SIEMENS AKTIENGESELLSCHAFT, 80333 München (DE)
(72) Erfinder: Birchbauer, Josef, 8322 Studenzen (AT); Bischof, Horst, 8010 Graz (AT); Groissenberger, Claus, 8020 Graz (AT); Heschgl, Kurt, 8010 Graz (AT); Marius, Wolfgang, 8043 Graz/Kroisbach (AT); Wachmann, Bernd, 8181 St. Ruprecht (AT); Winter, Martin, 8010 Graz (AT)

(57) **Zusammenfassung**

Verfahren zur Erstellung eines Archivs (ARC) digitaler Bilder (BIL), bei welchem ein Bild einer Fouriertransformation unterzogen und das Spektrum des Bildes in eine Anzahl sektorund/oder ringförmiger Teilbereiche unterteilt sowie der Mittelwert der in einem Teilbereich enthaltenen Punkte des Spektrums gebildet wird, und die daraus erhaltenen Werte zu einem Referenzmerkmalsvektor (REF) zusammengefasst werden, sowie aus den Referenzmerkmalsvektoren der Bilder (BIL) Cluster (CLU) gebildet werden, wobei die Referenzmerkmalsvektoren und die Cluster (CLU)in einem Archiv abgelegt werden.

## Beschreibung

Die Erfindung betrifft ein Verfahren zur Erstellung von Referenzen sowie zum Archivieren digitaler Bilder, bei welchem ein zu archivierendes Bild durch eine zweidimensionale Fouriertransformation in den Frequenzbereich überführt wird, sowie das Spektrum des Bildes in eine Anzahl sektor- und oder ringförmiger Teilbereiche unterteilt wird.

Den hier betrachteten Bildern liegen Muster, insbesondere von Fingerabdrücken, zugrunde, aber auch andere Muster mit einer inhärenten Struktur, wie beispielsweise Linientexturen eines zu erkennenden Bildes können im Rahmen der Erfindung behandelt werden. Im folgenden wird die Erfindung in erster Linie im Hinblick auf ihre Anwendung auf Fingerabdruckmuster dargestellt, ohne dass dies eine Einschränkung ausschließlich auf solche Muster bzw. Bilder bedeuten soll.

Neben der seit langer Zeit bestehenden Bedeutung der Fingerabdruckidentifizierung in der Kriminalistik erlangt die Identifikation von Fingerabdrücken auf maschineller Basis auch auf anderen Gebieten zunehmende Bedeutung, beispielsweise bei Kreditkarten- und Geldausgabeautomaten sowie bei der Zutrittskontrolle zu Gebäuden bzw. der Benutzungsberechtigungskontrolle bei Computersystemen, Telekommunikationsendgeräten etc.

Im Gegensatz zur Erfassung und Überprüfung anderer personenbezogener Merkmale, wie z. B. der Struktur der Iris, der Länge und Form der Finger oder der Stimme, bieten sich Fingerabdrücke als mit einfachen, rasch durchführbaren und für eine Person nicht unangenehmen Prozeduren erfassbar an. Einen Überblick über personenbezogene Merkmale gibt der Artikel "It had to be you" in IEEE Spectrum, Februar 1994. Dazu kommt, dass Fingerabdrücke bestens erforscht sind.

Sorgfältige Reihenuntersuchungen und Statistiken haben nachgewiesen, dass die Fingerabdrücke jedes Menschen individuell und selbst bei eineiigen Zwillingen unterschiedlich, wenngleich ähnlich sind.

Das Muster der Fingerabdrücke wird von den Papillarlinien, auch "Ridges" genannt, erzeugt, wobei für die Identifizierung vor allem als Minutien bezeichnete Merkmale von Bedeutung sind, nämlich Endpunkte, Verzweigungen, Inseln sowie andere singuläre Merkmale. Grundbegriffe sind ebenso wie kriminalistische Methoden in dem Standardwerk "The Science of Fingerprints", United States Department of Justice, FBI, U. S. Government Printing Office, Rev. 12 - 84, Catalog No. JI. 14/2. F49/12/977, enthalten. Nähere Einzelheiten zur automatischen Klassifizierung von Fingerabdrücken sind beispielsweise zu finden in "PCASYS-A Pattern-Level Classification Automatic System for Fingerprints", G. T. Candela et. al., U. S. Department of Commerce, August 1995.

Um die Lesbarkeit zu erleichtern und um Wiederholungen zu vermeiden werden nachstehend noch einige spezifische Fachausdrücke erläutert bzw. definiert.
- Fingerprint: Das unbearbeitete Bild eines Fingerabdruckes in maschinell bearbeitbarer Form.
- Identität: Ein Verweis auf eine bestimmte Person.
- Identität eines: Die Verbindung eines Fingerprints mit einer
- Fingerprints: Identität. Zusätzlich die Zusicherung, dass ein Fingerprint seinen Ursprung aus einem bestimmten Finger der Person hat.
- Encodierter Fingerprint: Die Menge der aus einem Fingerprint extrahierten und für die Wiedererkennung relevanten Merkmale.
- Anfrage Fingerprint: Ein Fingerprint, dessen Identität festgestellt bzw. geprüft werden soll.
- Referenz: Die aus einer nicht-leeren Menge von Fingerprints bekannter Identität gewonnene Information, die als Basis für den Vergleich mit Anfrage Fingerprints dient.
- Archiv: Eine Menge von Referenzen verschiedener Identität.
- Enrollment: Ein Verfahren, nach dem aus einer Menge von Fingerprints bekannter Identität eine Referenz erzeugt wird.

Vor allem bei den "nicht kriminalistischen" Anwendungen steht zu Beginn das sogenannte "Enrollment", das ist die Registrierung oder die Neuaufnahme von Fingerprints in ein Archiv von Referenzbildern. Die Aufnahme erfolgt üblicherweise als Grauwertbild mit Hilfe von Printsensoren die z. B. auf optischer, ultraschall oder kapazitiver Basis arbeiten.

Der Art der Archivierung von Fingerprintbildern kommt in der Praxis eine hohe Bedeutung zu, da bei Überprüfung eines Fingerabdrucks - eines Anfragebildes - ein Vergleich diese Abdrucks mit einer sehr großen Anzahl von Referenzbildern erforderlich sein kann. Bei den bekannten Archivierungsarten bzw. -verfahren kann die Identifizierung eines Fingerabdruckes mit einem hohen Zeitaufwand, abhängig von der Anzahl der Referenzbilder verbunden sein.

Das Bild eines Fingerabdrucks kann in einem binären Pixelfeld dargestellt werden, und die Bildung einer Referenz bzw. der Vergleich zweier Fingerabdruckbilder erfolgt zwischen solchen binären Pixelfeldern. Das ist in etwa in der EP 0 090 377 (Fingermatrix Inc.) beschrieben oder mit einem Vergleich unter Verwendung neuronaler Netze - in der WO 98/52149 (Siemens Aktiengesellschaft Österreich).

Es ist weiters bekannt geworden, zur Verringerung der anfallenden Datenmenge bzw. zur Beschleunigung des Vergleichs das Bild eines Fingerabdrucks einer zweidimensionalen Fouriertransformation zu unterwerfen und die Referenzbildung bzw. den Vergleich im Frequenzbereich durchzuführen. Ein derartiger Vergleich im Frequenzbereich ist z. B. in der DE 42 20 971 A1 (Chuo Hatsujo K. K.) beschrieben.

Die Unterteilung des Spektrums in Ringe und Sektoren zur Gewinnung von Merkmalsvektoren wurde von Coetzee, Louis and Botha, Elizabeth C. "Fingerprint Recognition in Low Quality Images", Pattern Recognition 26(10):1441-1460, sowie von Berfanger, David M. and George, Nicholas: "All-Digital Ring-Wedge Detector Applied to Fingerprint Recognition", Applied Optics 38 (2): 357-369, angegeben, und nähere Einzelheiten sind diesen Literaturstellen zu entnehmen.

Mit Hilfe der solchermaßen gewonnenen Merkmalsvektoren bietet sich zwar eine sehr brauchbare Methode zum Vergleich von Fingerabdrücken an, doch hat es sich gezeigt, dass die Wahl der Teilbereiche im Spektrum hinsichtlich ihrer Abmessungen, Lage und Anzahl kritisch ist, sodass sich für einen Vergleich oft lange Rechenzeiten ergeben, sofern entsprechende Anforderungen an seine Zuverlässigkeit gestellt werden. Es ist daher eine Aufgabe der Erfindung, eine Art der

Archivierung von digitalen Bildern zu schaffen, die es ermöglicht, auf einfache Weise ein gesuchtes Bild anhand eines Anfragebildes innerhalb kurzer Zeit in dem Archiv zu finden.

Diese Aufgabe wird mit einem Verfahren der eingangs genannten Art erfindungsgemäß dadurch gelöst, dass der Mittelwert der in einem Teilbereich enthaltenen Punkte des Spektrums gebildet wird, und die daraus für die Teilbereiche erhaltenen Werte zu einem mehrdimensionalen Referenzmerkmalsvektor zusammengefasst werden, sowie aus den Referenzmerkmalsvektoren zu archivierender Bilder Cluster in einem mehrdimensionalen Raum gebildet werden, wobei die Referenzmerkmalsvektoren in einem elektronischen Archiv abgelegt und jeweils dem Cluster zugeordnet werden, zu dessen Mittelpunkt sie die geringste Distanz in dem mehrdimensionalen Raum aufweisen.

Es ist ein Verdienst der Erfindung, durch Bildung von Clustern und die Zuordnung von Referenzmerkmalsvektoren der Bilder zu diesen Clustern, eine Struktur in dem Archiv zu schaffen, welche ein sehr effizientes Durchsuchen des Archivs anhand eines Anfragebildes bzw. Anfragemerkmalsvektors ermöglicht.

Eine Aufnahme von Referenzmerkmalsvektoren schlechter Qualität in das Archiv verschlechtert naturgemäß die spätere Leistungsfähigkeit des Fingerprintarchivs. Eine vorteilhafte Variante der Erfindung sieht deshalb vor, dass die Referenzmerkmalsvektoren der zu archivierenden digitalen Bilder normiert werden. Auf diese Weise können in den Bildern enthaltene Störungen, wie beispielsweise Helligkeitsunterschiede etc, eliminiert werden.

Vorteilhafterweise wird das Spektrum des zu archivierenden Bildes so verschoben, dass die Nullfrequenzkomponente bzw. der Gleichanteil in dem Ursprung des Bildes zu liegen kommt.

In einer besonders vorteilhaften Variante der Erfindung erfolgt die Unterteilung des fouriertransformierten Bildes in Teilbereiche mittels eines Wedge-Ring-Detektors, wobei das Zentrum des Wedge-Ring-Detektors mit der Nullfrequenzkomponente des transformierten Bildes im wesentlichen zur Deckung gebracht wird.

In einer bevorzugten Ausführungsform der Erfindung sind die digitalen Bilder Fingerprintbilder.

Zur Feststellung ob sich ein gesuchtes Bild in dem Archiv befindet eignet sich insbesondere ein Verfahren zum Vergleich eines Anfragebildes, mit nach dem Verfahren nach einem der Ansprüche 1 bis 5 archivierten Bildern, bei welchem aus dem Anfragebild ein Anfragemerkmalsvektor gebildet wird, wobei der Anfragemerkmalsvektor gleich wie der Referenzvektor eines zu archivierenden Bildes gebildet wird und der Cluster von Referenzmerkmalsvektoren bestimmt wird, zu dessen Mittelpunkt der Anfragemerkmalsvektor den geringsten Abstand in dem mehrdimensionalen Raum aufweist, und dieser Cluster nach einem mit dem Anfragemerkmalsvektor im wesentlichen übereinstimmenden, archivierten Referenzmerkmalsvektor durchsucht wird.

Die Erfindung samt weiteren Vorteilen wird im folgenden anhand eines nicht einschränkenden Ausführungsbeispiels näher erläutert, welches in der Zeichnung dargestellt ist. In dieser zeigen schematisch:
Fig. 1 einen Ablauf des erfindungsgemäßen Verfahrens;
Fig. 2 ein Fingerprintbild;
Fig. 3 eine Fouriertransformierte des Bildes aus Fig. 2 und
Fig. 4 ein über die Fouriertransformierte des Bildes aus Fig. 1 gelegter Wedgeringdetektor.

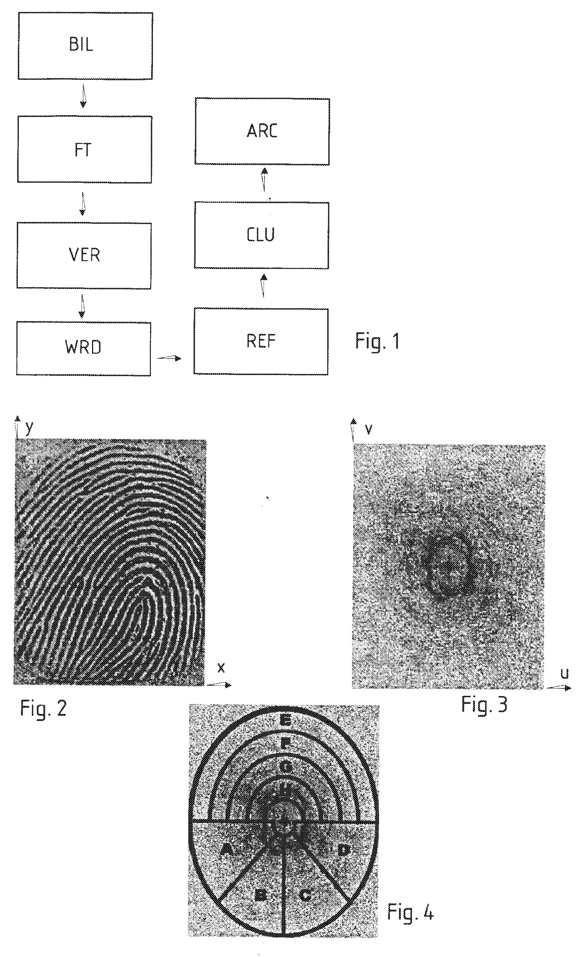

Ausgangspunkt für das erfindungsgemäße Verfahren gemäß Fig. 1 sind Bilder BIL, die beispielsweise mit Hilfe eines Fingerprintsensors erzeugt werden, z. B. Bitmaps mit 256 x 256 Pixel und 256 Grauwerten, und Fig. 2 zeigt ein Beispiel eines Fingerabdruck-Bildes oder Fingerprints. Bei der Aufnahme des Fingerprints kann natürlich auch die Identität der Person bzw. des Fingerprints aufgezeichnet werden.

Bei der Aufnahme von Fingerprints für ein Enrollment bzw. in ein Archiv ARC wird das aufgenommene Fingerprintbild mit den Bildkoordinaten x, y einer 2-dimensionalen Fouriertransformation FT unterworfen, sodass man aus der Bildfunktion I(x, y) eine komplexe Funktion F(u, v) als Fourierspektrum erhält. Aus dem Frequenzspektrum in Polardarstellung können der Betrags- und der Phasenanteil gewonnen und der Phasenanteil verworfen werden. Die Natur des verwendeten Verfahrens bewirkt, dass sich im Bild der Frequenzen die Anteile mit niedrigen Frequenzen in den "Ecken" sammeln. Für die nun folgende Analyse wird der Ursprung so transformiert, dass sich Gleichanteil und niederfrequente Anteile nahe beim Ursprung befinden (Fig. 2).

Symmetrie und Periodizität der Fouriertransformierten bewirken, dass man diese Operation auch als Permutation der Quadranten sehen kann. Solche Transformationsverfahren sind bekannt, und es sei diesbezüglich beispielsweise verwiesen auf: "The Scientist's and Engineer's Guide to Digital Signal Processing", S.W. Smith, 1999, California Technical Publishing, ISBN 0-9660-176-7-6, Chapter 24. "Linear Image Processing" (p. 397-421). Zur Fouriertransformation von Bildern siehe auch die DE 42 20 971 A1 bzw. Matt Young: "Optik, Laser, Wellenleiter", Kap.7; Springer Verlag 1997, ISBN 3-540-55010-0;

Im vorliegenden Fall ist in Fig. 3 nicht F(u, v) sondern log (1+|F(u, v)|) dargestellt, da sich so der hohe dynamische Bereich von |F(u, v)| besser verarbeiten lässt. Nähere Eigenschaften, soweit hier von Interesse, sind beispielsweise in Gonzales Rafael C. and Woods, Richard E. "Digital Image Processing". Addison-Wesley 1992, zu finden und müssen daher nicht weiter erläutert werden.

Die Fouriertransformierte des digitalen Bildes wird, wie bereits oben erwähnt, so verschoben, dass die Nullfrequenzkomponente bzw. der Gleichanteil des Fourierspektrums im wesentlichen an der Position des Mittelpunktes des Bildes BIL zu liegen kommt. Über die verschobene Fouriertransformierte VER des digitalen Bildes BIL wird ein sogenannter Wedgering-Detektor WRD (Fig. 4) gelegt, wobei das Zentrum des Wedgring-Detektors mit der Nullfrequenzkomponente bzw. dem Gleichanteil des fouriertransformierten Bildes im wesentlichen zur Deckung gebracht wird. Zu dem Begriff des Wedgering-Detektors WRD siehe beispielsweise: "All digital ring-wedge detector applied to fingerprint recognition", David M. Berfanger, Nicholas George; Applied Optics, Vol. 38, No 2, 10 January 1999.

Unter der Annahme, dass das ursprüngliche Bild realwertig ist, ergibt sich ein konjugiert symmetrisches Spektrum, was bedeutet, dass z. B. in Fig. 3 die obere und die untere Hälfte des Spektrums spiegelsymmetrisch zueinander sind. Bei der in Fig. 4 gezeigten Gliederung des Spektrums in ringförmige und sektorförmige Bereiche verwendet man dementsprechend eine (obere) Hälfte für die (halb)ringförmigen Bereiche E, F, G, H und die andere (untere) Hälfte für die sektorförmigen Bereiche a, B, C, D. Die Gleichkomponente (Frequenz = 0) befindet sich bei der hier gewählten Darstellung im Zentrum.

Es ist zu bemerken, dass gemäß Fig. 4 ein insgesamt elliptischer Bereich des Spektrums in Testbereiche unterteilt wird, was bei dem gegebenen Seitenverhältnis auch zweckmäßig ist, da bei einem Seitenverhältnis von 1:1 ein kreisförmiger Bereich zu unterteilen ist, sind in diesem Fall die Ringbereiche E bis H nicht Ellipsenringe, sondern Kreisringe. Gleiches gilt sinngemäß für die Sektoren A bis D.

Durch den Wedgringdetektor wird die Fouriertransformierte des Bildes BIL, wie soeben erwähnt, in ring- bzw. sektorförmige Teilbereiche unterteilt. Für jeden dieser Teilbereiche kann der Mittelwert der in ihr enthaltenen Bildpunkte des Spektrums berechnet werden. Auf diese Weise wird für jeden Teilbereich des Bildes ein Wert erhalten, welcher eine Komponente eines das Bild repräsentierenden Punktes bzw. Merkmalsvektors in einem mehrdimensionalen Raum darstellt.

Im folgenden werden diese das Bild repräsentierenden mehrdimensionalen Punkte bzw. Merkmalsvektoren als Anfragemerkmalsvektoren bzw. als Referenzmerkmalsvektoren REF bezeichnet je nach dem, ob sie zu Zwecken der Archivierung oder der Abfrage gebildet werden. Die Referenzmerkmalsvektoren REF und die Anfragemerkmalsvektoren stellen encodierte Fingerprints dar, wobei die Referenzmerkmalsvektoren REF die in dem Archiv ARC abgelegte Referenz und die Anfragemerkmalsvektoren Anfragefingerprints darstellen.

Um in dem Bild BIL enthaltene Störanteile zu vermeiden bzw. gering zu halten, kann eine Nachbearbeitung der Anfragemerkmals- bzw. Referenzmerkmalsvektoren REF erfolgen. Diese Nachbearbeitung kann beispielsweise darin bestehen, dass jeder Anfragemerkmals- bzw. Referenzmerkmalsvektor REF normiert wird, wobei eine Möglichkeit der Normierung darin besteht, dass jeder Vektor durch seine Länge dividiert wird.

Aus allen zu archivierenden Bildern BIL werden auf die oben beschriebene Weise Referenzmerkmalsvektoren REF gebildet, wobei diese Referenzmerkmalsvektoren REF mittels an sich bekannter Clustering-Algorithmen zu Clustern CLU zusammengefasst werden.

Derartige Clustering-Algorithmen sind beispielsweise die Growing Neural Gas Methode und der Learning Vector Quantization Algorithmus. Zur Growing Neural Gas Methode siehe beispielsweise: "Modellselektion von Clusteringverfahren mittels minimaler Beschreibungslänge", Diplomarbeit von Alexander Selb an der Technischen Universität Wien, 2000 oder auch "Vektorbasierte Neuronale Netze", Habilitationsschrift von Bernd Fritzke, 1998, Shaker Verlag 1998, ISBN: 3-8265-4458-7.

Die gängigen Clustering Algorithmen brauchen als Input neben der zu clusternden Datenmenge auch bereits die Anzahl der gewünschten Cluster. Die Bestimmung der Start-Zentren erfolgt üblicherweise durch eine zufällige Auswahl von n Datenpunkten aus einer Trainingsmenge. Die Clusteranzahl n kann z. B. durch einen gewissen Bruchteil der vorliegenden Datenpunkte festgelegt werden. Die oben erwähnte Growing Neural Gas Methode liefert jedoch eine bessere Start-Cluster-Menge und auch einen guten Näherungswert der benötigten Anzahl von Clustern CLU. Hierbei wird von einer Startmenge von 2 Clustern ausgegangen. Schritt für Schritt werden nun die Datenpunkte aus der Menge zu archivierender Bilder ausgelesen und bestehenden Clustern zugeordnet. In vorgebbaren Intervallen wird an der Position, an welcher der größte lokale Fehler (d. h. die größte Distanz zwischen einem Datenpunkt und einem zugeordneten Referenzvektor) auftritt ein neuer Cluster generiert. Das Ergebnis der Growing Neural Gas Methode ist eine Menge von Cluster-Zentren, die bereits Mittelwerte der ihnen zugeordneten Datenpunkte sind.

Der Learning Vector Quantization Algorithmus hingegen ist eine online Variante des k-means Algorithmus, d. h. im Gegensatz zum k-means Algorithmus muss bei Hinzufügen eines neuen Datenpunktes zur Trainingsmenge nicht der ganze Algorithmus neu trainiert werden, sondern es erfolgt lediglich eine Adaption des entsprechenden Clusters. Die Zuordnung zu den Clustern CLU funktioniert im wesentlichen aber so wie im k-means Algorithmus, d. h. unter Zuhilfenahme der Euklidischen Distanz. Wird einem Cluster ein neuer Datenpunkt zugeordnet, so erfolgt eine (durch eine Lernrate gedämpfte) Verschiebung des entsprechenden Referenzvektors in Richtung des Datenpunktes. Zum "Learning Vector Quantization Algorithmus" siehe beispielsweise: "Modellselektion von Clusteringverfahren mittels minimaler Beschreibungslänge", Diplomarbeit von Alexander Selb an der Technischen Universität Wien, 2000 oder auch "Vektorbasierte Neuronale Netze", Habilitationsschrift von Bernd Fritzke, Shaker Verlag 1998, ISBN: 3-8265-4458-7.

Die Referenzvektoren REF werden in dem Archiv ARC denjenigen Clustern CLU zugeordnet, zu deren Mittelpunkt sie die geringste Distanz aufweisen.

Soll nun überprüft werden, ob sich ein Fingerprint in dem Archiv ARC befindet, so wird für aus dem Anfragefingerprint nach dem oben beschriebenen Schema - auf die gleiche Art wie der Referenzmerkmalsvektor REF eines zu archivierenden Bildes BIL - der Anfragemerkmalsvektor berechnet. Anschließend erfolgt durch Distanzberechnung (z. B. durch Berechnung der Euklidischen Distanz) die Zuordnung dieses Anfragemerkmalsvektors zu einem der Cluster CLU, d.h. die Zuordnung des Anfragemerkmalsvektors erfolgt zu dem Cluster CLU, zu dessen Mittelpunkt der Abstand des Anfragemerkmalsvektors minimal ist. Nun wird die Menge der diesem Cluster CLU zugeordneten Referenzvektoren REF auf einen "Treffer" d. h. auf Übereinstimmung mit dem Anfragemerkmalsvektor überprüft.

Sollte keine Übereinstimmung gefunden werden, so wird der dem Anfragemerkmalsvektor am zweitnächsten liegende Cluster CLU durchsucht. Sollte auch hier keine Übereinstimmung mit einem Referenzvektor REF dieses Clusters CLU gefunden werden, so kann auch noch der drittnächste Cluster CLU untersucht werden.

## Patentansprüche

1. Verfahren zur Erstellung von Referenzen sowie zum Archivieren digitaler Bilder (BIL), bei welchem ein zu archivierendes Bild durch eine zweidimensionale Fouriertransformation in den Frequenzbereich überführt wird, sowie das Spektrum des Bildes in eine Anzahl sektor- und/oder ringförmiger Teilbereiche unterteilt wird,
**dadurch gekennzeichnet, dass** der Mittelwert der in einem Teilbereich enthaltenen Punkte des Spektrums gebildet wird, und die daraus für die Teilbereiche erhaltenen Werte zu einem mehrdimensionalen Referenzmerkmalsvektor (REF) zusammengefasst werden, sowie aus den Referenzmerkmalsvektoren (REF) zu archivierender Bilder (BIL) Cluster (CLU) in einem mehrdimensionalen Raum gebildet werden, wobei die Referenzmerkmalsvektoren (REF) in einem elektronischen Archiv (ARC) abgelegt und jeweils dem Cluster (CLU) zugeordnet werden, zu dessen Mittelpunkt sie die geringste Distanz in dem mehrdimensionalen Raum aufweisen.

2. Verfahren nach Anspruch 1,
**dadurch gekennzeichnet, dass** das Spektrum des zu archivierenden Bildes (BIL) so verschoben wird, dass die Nullfrequenzkomponente bzw. der Gleichanteil in dem Ursprung des Bildes (BIL) zu liegen kommt.

3. Verfahren nach Anspruch 2,
**dadurch gekennzeichnet, dass** die Unterteilung des fouriertransformierten Bildes in Teilbereiche mittels eines Wedge-Ring-Detektors (WRD) erfolgt, wobei das Zentrum des Wedge-Ring-Detektors (WDR) mit der Nullfrequenzkomponente des transformierten Bildes im wesentlichen zur Deckung gebracht wird.

4. Verfahren nach einem der Ansprüche 1 bis 3,
**dadurch gekennzeichnet, dass** die Referenzmerkmalsvektoren (REF) der zu archivierenden digitalen Bilder (BIL) normiert werden.

5. Verfahren nach einem der Ansprüche 1 bis 4,
**dadurch gekennzeichnet, dass** die digitalen Bilder (BIL) Fingerprintbilder sind.

6. Verfahren zum Vergleich eines Anfragebildes, mit nach dem Verfahren nach einem der Ansprüche 1 bis 5 archivierten Bildern (BIL), bei welchem aus dem Anfragebild ein Anfragemerkmalsvektor gebildet wird,
**dadurch gekennzeichnet, dass** der Anfragemerkmalsvektor gleich wie der Referenzvektor (REF) eines zu archivierenden Bildes gebildet wird und der Cluster (CLU) von Referenzmerkmalsvektoren bestimmt wird, zu dessen Mittelpunkt der Anfragemerkmalsvektor den geringsten Abstand in dem mehrdimensionalen Raum aufweist, und dieser Cluster (CLU) nach einem mit dem Anfragemerkmalsvektor im wesentlichen übereinstimmenden, archivierten Referenzmerkmalsvektor (REF) durchsucht wird.
